# FASCICULE DE BREVET EUROPEEN

(11) **EP 1 476 859 B1**
(45) Date de publication et mention de la délivrance du brevet: **27.11.2019**
(21) Numéro de dépôt: 03718847.1
(22) Date de dépôt: 07.02.2003
(51) Int. Cl.: G08C 19/28, G08C 25/02, H04L 12/18, H04L 12/28

(54) **PROCÉDÉ D'APPARIEMENT D'OBJETS BIDIRECTIONNELS**
VERFAHREN ZUR ZUORDNUNG BIDIREKTIONALER GEGENSTÄNDEN
METHOD FOR MATCHING BIDIRECTIONAL OBJECTS

(30) Priorité: 11.02.2002 FR 0201630
(43) Date de publication de la demande: 17.11.2004
(73) Titulaire: SOMFY ACTIVITES SA, 74300 Cluses (FR)
(72) Inventeur: VALOTEAU, Francis, F-74000 Annecy (FR); MAISTRE, Valérie, F-74300 Thyez (FR); AUTRET, Capucine, F-74460 Marnaz (FR)
(74) Mandataire: Verriest, Philippe
(86) Numéro de dépôt international: PCT/FR2003/000389
(87) Numéro de publication internationale: WO 2003/069573

(56) Documents cités:
- EP-A- 0 651 119
- WO-A-01/71685
- US-A- 5 797 085
- US-A- 6 028 866

## Description

L'invention concerne le domaine des transmetteurs d'ordres et récepteurs d'ordres, présentant des capacités d'émission et de réception; elle concerne notamment les transmetteurs et récepteurs des systèmes domotiques.

De tels systèmes domotiques sont utilisés pour les produits motorisés ou des automatismes de fermeture ou de protection solaire dans le bâtiment, ou encore pour les commandes de luminaires ou autres. Typiquement, on prévoit un ou plusieurs transmetteurs d'ordres; chaque dispositif à commander - volet roulant, store, luminaire, etc - est associé à un récepteur d'ordres; on peut aussi prévoir qu'un même récepteur d'ordres commande plusieurs dispositifs. Les transmetteurs d'ordres et les récepteurs d'ordres communiquent par radio et utilisent une même fréquence de transmission, ou des fréquences prédéterminées. Pour ces dispositifs, et notamment pour les produits motorisés ou des automatismes de fermeture ou de protection solaire dans le bâtiment, des raisons logistiques nécessitent le plus souvent que l'appariement ne soit pas réalisé à la fabrication, mais plutôt sur chantier, après installation des produits. Diverses solutions d'appariement sont proposées dans l'état de la technique.

Certaines solutions concernent le cas où les transmetteurs d'ordres ne sont capables que d'émettre, et où les récepteurs d'ordres ne sont capables que de recevoir. US-A-4 750 118 ou US-A-6 049 289 sont des exemples de telles solutions.

D'autres solutions utilisent des transmetteurs d'ordres et des émetteurs d'ordres capables d'émettre comme de recevoir; on peut notamment citer US-A-4 529 980, ou US-A-5 148 159.

WO-A-01 71685 divulgue un contrôleur à distance universel, adapté à contrôler diverses unités. Chaque unité contient un enregistrement des diverses informations nécessaires pour permettre au contrôleur de la gérer à distance, avec en particulier un code d'appareil; l'enregistrement est copié dans le contrôleur universel. Ce document propose que le contrôleur interroge successivement les diverses unités qu'il contrôle.

US-A-5 797 085, décrit un système de communication dans lequel les différents objets ne sont pas appariés. Au contraire, les objets sont identiques du point de vue de la communication et ne disposent pas d'une adresse unique.

EP-A-0 651 119, décrit un ensemble de transmetteur et récepteurs, et mentionne le problème de l'appariement. L'appariement s'effectue en apprenant un code à un transmetteur à partir d'un autre transmetteur. Les deux transmetteurs sont disposés l'un à côté de l'autre, et le bouton du canal en cause est activé sur chaque transmetteur, en commençant par le transmetteur "enseignant". Cette procédure d'apprentissage des codes de proche en proche est aussi appliquée au récepteur. Le document prévoit d'inhiber la fonction d'enseignement des codes sur certains transmetteurs.

US-A-6 028 866, décrit un système de communication dans lequel chaque appareil comprend une identification de communication, qui est affectée en usine ou par l'utilisateur. Pour une constitution de groupes, un appareil central émet un message invitant les appareils à joindre le groupe. A réception du message d'invitation, un appareil répond le cas échéant par un message d'acceptation. L'appareil central stocke une liste des appareils composant le groupe, c'est-à-dire des appareils ayant répondu par un message d'acceptation. Cette procédure de constitution d'un groupe permet l'émission de messages destinés au groupe.

La demande de brevet français déposée par la demanderesse le 13/7/01 sous le numéro 01 09369 décrit un procédé d'appariement d'émetteur et de récepteur. Il est précisé, dans cette demande, qu'il est possible de fournir à un installateur une console de programmation. Chacun des récepteurs est alors également émetteur, et la console de programmation est alors non seulement émettrice mais également réceptrice. En phase d'appariement, les récepteurs envoient vers la console un numéro d'identification qui leur est propre. Le logiciel contenu dans la console permet d'ordonner les récepteurs qui se sont annoncés. L'installateur a alors la possibilité d'envoyer, de manière successive, une commande qui ne sera reconnue que par le seul récepteur concerné, et de procéder à l'appariement de ce récepteur, qui s'est ainsi identifié physiquement en répondant à ladite commande, avec l'émetteur destiné par la suite à le commander. Dans cette solution, il est proposé d'utiliser une console spécifique; celle-ci n'est pas elle-même appariée avec le récepteur, mais qui est utilisée d'une part pour identifier le récepteur, puis pour apparier ce dernier avec l'émetteur.

Il existe donc un besoin d'un procédé permettant d'apparier des objets capables d'émettre comme de recevoir, de façon simple et fiable. Un tel procédé devrait conserver sa fiabilité même dans un environnement radio ou réseau chargé - par exemple en présence de produits voisins déjà configurés, ou de produits voisins en cours de configuration.

La présente invention est définie par l'objet des revendications indépendantes.

D'autres caractéristiques et avantages de l'invention apparaîtront à la lecture de la description qui suit, donnée à titre d'exemple et en référence aux dessins qui montrent
- figure 1, une vue schématique d'une installation selon l'invention ;
- figure 2, une vue schématique de la structure logique d'un objet bidirectionnel permettant la mise en œuvre de l'invention;
- figure 3, un ordinogramme d'un procédé d'appariement selon l'invention;
- figure 4, un ordinogramme d'un procédé permettant de sécuriser la définition d'un groupe parmi les objets bidirectionnels;
- figure 5, un ordinogramme d'un procédé mis en œuvre dans un récepteur d'ordres;
- figure 6, un ordinogramme d'un procédé mis en œuvre dans le transmetteur d'ordres.

Dans la suite de la description, l'invention est décrite dans un exemple d'application à l'appariement de systèmes domotiques; elle ne se limite pas à de tels systèmes; elle peut aussi être utilisée à d'autres fins que l'appariement. On utilise dans la suite les mots "transmetteur d'ordre" et "récepteur d'ordre", pour désigner des objets qui ont pour fonction de transmettre ou recevoir les ordres donnés par un utilisateur; ces désignations ne sont pas représentatives des fonctionnalités des "transmetteurs" ou "récepteurs", qui du point de vue des signaux, sont capables d'émettre comme de recevoir. On aurait donc pu parler "d'objet bidirectionnel", c'est-à-dire d'un objet présentant des capacités d'émission et de réception. Pour la clarté de l'explication, on utilise les mots "transmetteurs" ou "récepteurs" - qui ne représentent que l'affectation d'un objet bidirectionnel donné à un usage particulier.

On suppose aussi, dans la suite de la description que chaque objet bidirectionnel est muni d'un identifiant univoque; il peut s'agir d'un identifiant correspondant à un code de l'objet, donné en usine et qui n'est pas susceptible d'être modifié; il peut aussi s'agir d'un nombre susceptible d'être modifié, comme un nombre aléatoire choisi dans l'objet ou encore un nombre choisi à l'aide de micro-commutateurs. L'origine de l'identifiant est sans incidence sur le fonctionnement du procédé. On notera aussi que l'identifiant utilisé dans la suite peut être modifié après l'appariement : il sert simplement, lors de l'appariement, à identifier un objet.

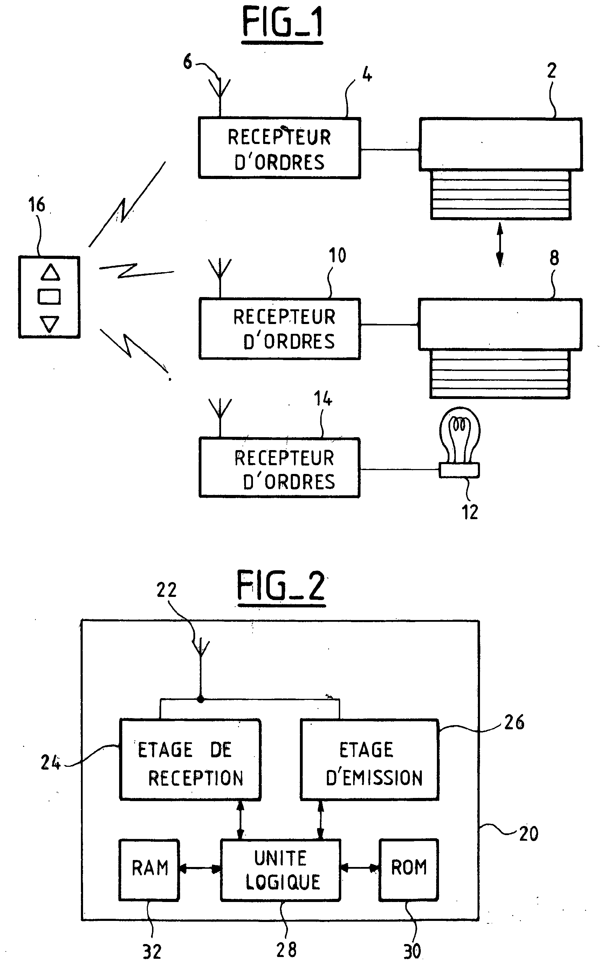

La figure 1 montre une vue schématique d'une installation dans un premier exemple de mise en œuvre de l'invention. L'installation comprend un opérateur 2. Cet opérateur peut, par exemple enrouler ou dérouler des stores, des volets roulants ou une porte de garage, actionner un luminaire, ouvrir une porte, enclencher ou déclencher une alarme, etc. A l'opérateur est relié un récepteur d'ordres 4, référencé par la lettre "R" sur la figure. Le récepteur d'ordres présente une antenne 6 qui lui permet de recevoir des ordres transmis par voie hertzienne depuis un transmetteur d'ordres; le récepteur d'ordres 4 peut en outre émettre des signaux, par exemple par la voie hertzienne, à l'aide de la même antenne 6 . La transmission par radio des ordres depuis un transmetteur vers un récepteur ou dans le sens inverse est connue en soi et n'est pas décrite plus en détail ici.

La figure 1 montre encore une pluralité d'opérateurs 8, 12, ayant chacun leur récepteur d'ordres 10, 14. Elle montre encore un transmetteur d'ordres 16; celui-ci est adapté à transmettre par voie hertzienne un ou des ordres à destination des récepteurs 4, 10, 14, et présente à cette fin une antenne non représentée. Typiquement, un transmetteur d'ordres, dans le cas de la commande d'un volet roulant, peut transmettre des ordres de montée ou de descente du volet ou d'arrêt du volet; on peut prévoir d'autres ordres, comme la mise du volet dans des positions préprogrammées du volet, des ordres de programmation du volet, etc. Le transmetteur d'ordres présente donc un ou plusieurs dispositifs permettant à l'utilisateur d'entrer une commande, dans le cas le plus simple un ou plusieurs boutons de commande. Le transmetteur d'ordres est aussi adapté à recevoir des signaux depuis le ou les récepteurs d'ordres; on peut, comme dans le cas du récepteur d'ordres, utiliser la même antenne.

Ainsi, en fonction de la commande reçue de la part de l'utilisateur, de son programme d'exploitation et/ou des signaux reçus depuis les récepteurs d'ordres, le transmetteur d'ordres émet des signaux, comme expliqué dans la suite.

On peut prévoir pour le transmetteur d'ordres comme pour le récepteur d'ordres des canaux de transmission divers en émission ou en réception; dans une configuration simple, on utilise la radio, le transmetteur comme l'émetteur constituant alors un "transceiver", c'est-à-dire un émetteur-récepteur.

Le problème de l'invention est d'apparier un transmetteur d'ordres à un récepteur d'ordres, autrement dit d'assurer que les commandes émises par l'un des transmetteurs d'ordres permettent d'actionner l'opérateur par l'intermédiaire du récepteur d'ordres - tandis que l'émission de commandes par d'autres transmetteurs d'ordres reste sans effet. Une fois un tel appariement effectué, il existe des solutions permettant d'ajouter d'autres transmetteurs d'ordres, par exemple pour créer une commande générale, c'est-à-dire un transmetteur d'ordres permettant de commander plusieurs récepteurs d'ordres.

A cette fin, l'invention propose qu'un récepteur d'ordres, en présence d'un événement initiateur, émette son identifiant. Par la suite, en présence d'une commande reçue depuis un transmetteur d'ordres, le récepteur d'ordres est affecté temporairement à ce transmetteur d'ordres; autrement dit, il ne répond pas ou plus aux commandes reçues depuis les autres transmetteurs d'ordres; l'affectation n'est que temporaire et ne constitue donc pas un appariement.

Cette "affectation temporaire" permet de procéder à un appariement d'un récepteur d'ordres ayant subi l'événement initiateur, même dans un environnement radio chargé, dans lequel des messages nombreux sont transmis.

En termes d'états, un récepteur d'ordres présente donc trois états distincts. Dans le premier état, le récepteur n'est pas apparié. Dans le deuxième état, le récepteur d'ordres est affecté temporairement à un transmetteur d'ordres. Le troisième état est un état d'appariement. Le récepteur d'ordres passe du premier état au deuxième état après l'événement initiateur, lorsqu'il reçoit une commande d'un transmetteur d'ordres. Le récepteur d'ordres passe du deuxième état au troisième état lorsqu'il reçoit une commande d'appariement. On peut prévoir, comme indiqué plus bas, que le récepteur d'ordres, une fois dans le troisième état, ne réagit plus à un événement initiateur.

La figure 2 est une vue schématique de la structure logique d'un objet bidirectionnel utilisé comme transmetteur d'ordres ou comme récepteur d'ordres. Dans l'exemple de la figure, l'objet est un "transceiver" et transmet et reçoit des signaux par voie hertzienne, à l'aide d'une antenne unique. L'objet 20 présente donc une antenne 22, un étage de réception 24, relié à l'antenne; l'étage de réception reçoit les signaux captés par l'antenne 22. Il présente aussi un étage d'émission 26, lui aussi relié à l'antenne 22, qui transmet à l'antenne des signaux à émettre. L'étage d'émission et l'étage de réception sont commandés par une unité logique 28, comme un microprocesseur, qui est capable d'exécuter un programme stocké dans une mémoire 30, typiquement une mémoire morte. L'objet comprend encore une mémoire vive 32 dont le contenu peut être modifié en cours de fonctionnement de l'objet.

En fonction de son affectation comme transmetteur d'ordres ou comme récepteurd'ordres, la source de puissance alimentant l'objet peut varier; typiquement, un transmetteur d'ordres est un dispositif portable, alimenté par une pile ou batterie; un récepteur d'ordres est relié à un opérateur et peut donc être alimenté par le secteur.

Un transmetteur d'ordres et un récepteurd'ordres peuvent aussi différer par le programme d'exploitation stocké dans la mémoire 30 - dans la mesure où il est avantageux, pour limiter la taille de la mémoire 30, de différencier les objets en chargeant dans la mémoire un programme d'exploitation qui n'est conçu que pour les seules fonctionnalités de transmetteur d'ordres (ou de récepteur d'ordres).

L'identifiant de l'objet peut être stocké dans la mémoire morte 30, ou encore peut être stocké dans la mémoire 32, s'il est généré aléatoirement ou autrement.

On n'a pas représenté à la figure les moyens qui permettent à un objet de réagir à une commande de l'utilisateur : il peut s'agir, pour un transmetteur d'ordres comme pour un récepteur d'ordres, de boutons, contacts, commutateurs ou autres. On peut aussi prévoir que l'objet est sensible à une ou plusieurs coupures de l'alimentation électrique; ceci est particulièrement avantageux pour un récepteur d'ordres, comme indiqué plus bas.

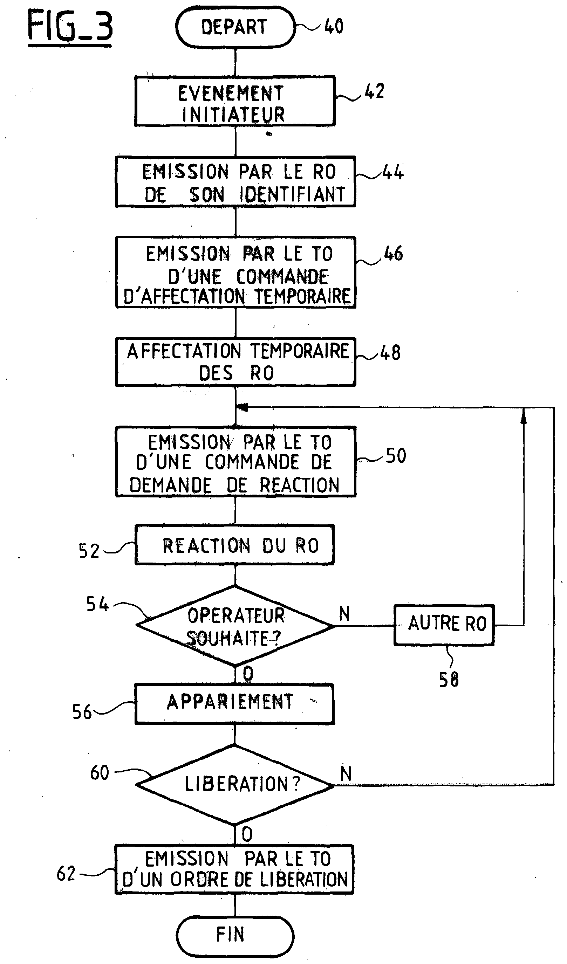

La figure 3 est un ordinogramme d'un procédé d'appariement, dans un mode de mise en œuvre de l'invention. On suppose au départ (étape 40) l'existence de plusieurs objets bidirectionnels destinés à fonctionner comme "récepteurs d'ordres" et d'un objet bidirectionnel utilisé comme transmetteur d'ordres.

A l'étape 42, un événement initiateur est produit par l'utilisateur; il s'agit d'une commande extérieure - c'est-à-dire qui n'est pas émise par un transmetteur d'ordres. Il peut s'agir par exemple d'une action spécifique sur la tension d'alimentation des récepteurs d'ordres, typiquement une double coupure de la tension secteur. Cette solution présente l'avantage d'être simple à mettre en œuvre, dans la mesure où les récepteurs d'ordres sont généralement reliés au secteur, comme expliqué plus haut. On peut aussi imaginer que l'événement initiateur résulte pour un récepteur d'ordres de l'actionnement d'une commande locale, ou d'une modification locale des branchements électriques; cette solution permet notamment un nouvel appariement d'un récepteur d'ordres, même s'il a auparavant été apparié. Dans tous les cas, l'événement initiateur est perçu par les récepteurs d'ordres.

On pourrait aussi utiliser comme événement initiateur la réception d'une commande émise par un transmetteur d'ordres; cette solution pourrait permettre d'apparier un récepteur d'ordres parmi l'ensemble de ceux qui sont susceptibles de recevoir la commande en cause. Cette solution présente l'inconvénient de ne pas permettre de sélectionner les récepteurs d'ordres - sauf à supposer qu'ils sont déjà appariés à un transmetteur d'ordres particulier. On pourrait aussi utiliser comme événement initiateur la combinaison d'une commande extérieure et d'une commande émise par un transmetteur d'ordres; la commande extérieure - par exemple une action locale sur le récepteur - permet de sélectionner les récepteurs d'ordres devant répondre; la commande émise par le transmetteur d'ordres permet un synchronisme qui peut être utile, comme décrit plus bas.

A l'étape 44, en réponse à l'événement initiateur, un récepteur d'ordres devant être apparié émet un signal représentatif de son identifiant et d'une indication qu'il est disponible pour appariement. Comme on vient de le mentionner, il peut s'agir de récepteurs d'ordres qui n'ont jamais auparavant été appariés; il peut aussi s'agir de récepteurs d'ordres qui ont déjà été appariés et que l'on souhaite de nouveau apparier. Le signal émis est dans le cas le plus simple constitué de l'identifiant du récepteur d'ordres et d'un code spécifique signalant qu'il est disponible pour appariement; on peut aussi prévoir de n'émettre que l'identifiant du récepteur, sous un format spécifique.

Cette émission peut être répétée, à intervalles réguliers ou aléatoires, pendant une durée prédéterminée - par exemple 2 à 3 minutes. Si plusieurs récepteurs d'ordres émettent - ce qui est l'hypothèse la plus probable - les règles classiques de détection de collision et de répétition sont utilisables pendant l'émission. La durée prédéterminée peut être sélectionnée en fonction des règles de détection de collision ou de répétition, et du nombre maximal admissible de récepteurs d'ordres émettant lors de cette étape.

A l'issue de cette étape, le ou les récepteurs d'ordres ayant reçu l'événement initiateur ont émis leur identifiant; de la sorte, un "auditeur" des signaux émis sait quels récepteurs d'ordres ont réagi à l'événement initiateur; un transmetteur d'ordres actif pendant l'étape 44 peut donc constituer une liste des récepteurs d'ordres ayant émis pendant cette étape.

A l'étape 46, un transmetteur d'ordres est activé et émet un signal représentatif de son identifiant et d'une commande d'affectation temporaire. Les remarques faites à l'étape 44 sur la structure du signal émis restent valables, *mutatis mutandis,* pour ce signal comme dans la suite pour les autres signaux émis.

Les étapes 46 et 44 peuvent être inversées; ceci assure que le transmetteur d'ordres est actif lorsque les récepteurs d'ordres émettent leur identifiant; inversement, on peut préparer le transmetteur d'ordres avant l'événement initiateur, en lui indiquant par une manœuvre locale qu'il doit "écouter" les récepteurs d'ordres.

A l'étape 48, les récepteurs d'ordres ayant transmis leur identifiant à l'étape 44 enregistrent l'identifiant du transmetteur d'ordres, dans une mémoire. Pendant une durée prédéterminée, ces récepteurs d'ordres refuseront d'obéir à toute commande ne provenant pas de ce transmetteur d'ordres. Ces récepteurs sont donc affectés temporairement au transmetteur d'ordres ayant émis la commande d'affectation temporaire à l'étape 46. On notera ici que l'émission de l'identifiant par le transmetteur d'ordres à l'étape 46 n'a pour fonction que de permettre l'affectation temporaire du transmetteur d'ordres et des récepteurs d'ordres. On pourrait utiliser un identifiant temporaire, pour cette seule affectation temporaire.

La durée prédéterminée d'affectation temporaire a pour fonction de permettre l'appariement provisoire d'un transmetteur d'ordres et d'un récepteur d'ordres; elle peut être fixe - et dans ce cas, les récepteurs d'ordres repassent en fonctionnement normal à l'expiration de cette durée. Il est aussi possible, comme expliqué plus bas, que l'affectation temporaire ne cesse qu'à l'émission par le transmetteur d'ordres d'une commande de libération ou de fin d'affectation temporaire.

A l'issue de cette étape 48, le ou les récepteurs d'ordres s'étant identifiés à l'étape 44 et ayant reçu une commande d'affectation temporaire à l'étape 46 n'obéissent plus qu'aux commandes reçues du transmetteur d'ordres; le transmetteur d'ordres ayant transmis la commande d'affectation temporaire dispose, quant à lui, d'une liste des récepteurs d'ordres. Il devient ainsi possible de procéder à l'appariement, ou à toute autre manipulation impliquant le transmetteur et les récepteurs, indépendamment de l'environnement radio. Cette affectation temporaire garantit l'identification correcte des objets bidirectionnels en cause, dans un environnement réseau ou radio chargé, dans lequel de très nombreux messages sont transmis par des objets déjà configurés - appartements voisins par exemple - ou dans lequel d'autres objets d'installations voisines peuvent eux-mêmes être en phase de configuration.

On décrit maintenant l'utilisation de cette affectation temporaire, pour l'appariement. L'appariement repose sur le balayage de la liste de récepteurs d'ordres constituée lors des étapes précédentes. Pour le balayage, on peut imaginer l'usage d'un écran si le transmetteur d'ordres est une véritable console de programmation, mais plus simplement il s'agira par exemple d'une action sur un bouton poussoir si le transmetteur d'ordres est une simple télécommande.

A l'étape 50, le transmetteur d'ordres émet un signal représentatif de son identifiant et d'une commande de demande de réaction, à destination d'un récepteur de la liste - par exemple le premier de la liste. La demande de réaction a pour fonction de permettre à l'utilisateur de déterminer visuellement, phoniquement ou par toute autre méthode, le récepteur adressé. Pour un transmetteur d'ordres constitué d'une télécommande, on peut utiliser pour émettre ce signal, la commande *Stop.*

A l'étape 52, à réception de la commande de demande de réaction, le récepteur concerné réagit par un signal. Ce signal est constitué par exemple par la commande brève de l'opérateur piloté par le récepteur concerné; un tel signal permet à l'utilisateur d'identifier le récepteur.

A l'étape 54, l'utilisateur détermine si le signal émis à l'étape 52 provient ou non de l'opérateur désiré. Si c'est le cas, on passe à l'étape 56, et sinon, on passe à l'étape 58.

A l'étape 58, on passe à un autre récepteur de la liste - par exemple le récepteur suivant. Ceci correspond à un balayage séquentiel de la liste; on peut aussi procéder à un balayage aléatoire de la liste. On repasse ensuite à l'étape 50, pour émettre une nouvelle commande de demande de réaction à l'attention de cet autre récepteur. Pour passer à un autre récepteur, on peut utiliser à nouveau la même commande du transmetteur d'ordres.

A l'étape 56, le récepteur à apparier a répondu à la commande de demande de réaction. Il est alors possible de procéder à l'appariement proprement dit; celui-ci peut s'effectuer à l'aide du transmetteur d'ordres affecté temporairement, en émettant un signal représentatif de l'identifiant de transmetteur et d'une commande d'appariement, à destination du récepteur à apparier. On peut envoyer une clé d'identification du transmetteur d'ordres, un autre identifiant à utiliser dans la suite, ou toute autre information nécessaire à l'appariement. On peut utiliser sur une télécommande un bouton *Prog* de programmation.

Il est aussi possible d'utiliser le transmetteur d'ordres comme simple console de programmation; dans ce cas, on prévoit qu'un récepteur devient réceptif à un ordre d'appariement après avoir répondu à une commande de demande réaction. Un récepteur peut rester dans cet état pendant une durée fixe, jusqu'à ce qu'il reçoive une commande d'appariement, ou jusqu'à ce qu'il reçoive une nouvelle commande de demande de réaction provenant du transmetteur d'ordres auquel il est temporairement affecté et qui est destiné à un autre récepteur. Ainsi, à l'étape 56, le récepteur d'ordres qui a répondu en dernier à la commande de demande de réaction peut être apparié, simplement en envoyant une commande d'appariement à l'aide du transmetteur d'ordres à apparier; cette solution présente l'avantage de permettre de continuer ensuite à balayer la liste à l'aide du transmetteur d'ordres utilisé à l'étape 46, le récepteur d'ordres ayant répondu en dernier étant maintenant apparié. Ayant assisté à la procédure d'appariement, le transmetteur d'ordres utilisé comme console de programmation peut exclure de la liste des récepteurs l'identifiant du récepteur d'ordres maintenant apparié. Ainsi, le même objet peut servir d'outil de désignation successive de chacun des objets à apparier, sans pour autant être lui-même apparié. Cet objet peut être lui-même très simple, et ne pas comporter plus de boutons de commande qu'un traditionnel point de commande.

Quel que soit le transmetteur d'ordres à apparier, le récepteur d'ordres stocke dans une mémoire l'identifiant du transmetteur d'ordres, de sorte à pouvoir ensuite répondre aux commandes qu'il reçoit de sa part. Il passe dans un état apparié, dans lequel il ne répond plus à un événement initiateur tel qu'une double coupure secteur, mais simplement à un événement initiateur particulier - une action locale ou encore une commande de ré-appariement provenant du transmetteur d'ordres auquel il est apparié.

L'appariement décrit sommairement à l'étape 56 peut être plus complexe et comprendre des échanges multiples entre le transmetteur à apparier et le récepteur; on peut transmettre de nouveaux identifiants, des clefs d'authentification, des informations cryptées, un code tournant, ou autres, en fonction du procédé d'authentification utilisé dans la suite.

Des variantes à ces deux solutions d'appariement sont possibles; ainsi, on pourrait assurer un pré-appariement entre le transmetteur d'ordres utilisé comme console de programmation et le transmetteur d'ordres à apparier; dans ce cas, pour l'appariement, le transmetteur d'ordres utilisé comme console de programmation transmettrait un identifiant du transmetteur d'ordres à apparier. Cette solution présente l'avantage d'une plus grande sécurité, même lorsque l'on n'apparie pas le transmetteur d'ordres ayant émis l'ordre d'affectation temporaire.

A l'issue de l'étape d'appariement 56, un transmetteur d'ordres est apparié au récepteur d'ordres ayant réagi en dernier à la commande de demande de réaction. Aux étapes 60 et 62, on procède le cas échéant à la libération des autres récepteurs affectés temporairement. Comme expliqué plus haut, ces étapes ne sont pas indispensables : on peut programmer les récepteurs de sorte à ce que l'affectation temporaire cesse après une durée fixe; on peut aussi faire cesser l'affectation temporaire à réception d'une commande d'appariement, même destinée à un autre récepteur d'ordres.

Il est toutefois avantageux de fournir la possibilité à l'utilisateur de poursuivre l'appariement des récepteurs de la liste autres que celui qui vient d'être apparié. Ceci évite de devoir émettre à nouveau l'événement initiateur pour apparier les autres récepteurs. A l'étape 60, on teste si l'utilisateur désire libérer les autres récepteurs. Si tel est le cas, on passe à l'étape 62 où l'on émet un ordre de libération; sinon, on repasse à l'étape 50, pour l'émission d'une nouvelle commande de demande de réaction; les étapes 60 et 62 peuvent être implicites; ainsi, si le transmetteur d'ordres est utilisé comme console de programmation, le test de l'étape 60 peut simplement consister à vérifier si l'utilisateur active de nouveau le bouton d'envoi d'une commande de demande de réaction - ce qui fait directement passer à l'étape 50. En l'absence d'une telle commande de demande de réaction, on passerait à l'étape 62, à moins que la libération ne soit implicite après l'écoulement d'une durée fixe. On peut aussi imaginer, à l'inverse, que l'on émet à l'étape 62 un nouvel événement initiateur, sous forme d'une commande spécifique à destination des récepteurs de la liste non encore appariés.

Le procédé décrit à la figure 3 permet un appariement sûr, indépendamment de l'environnement radio.

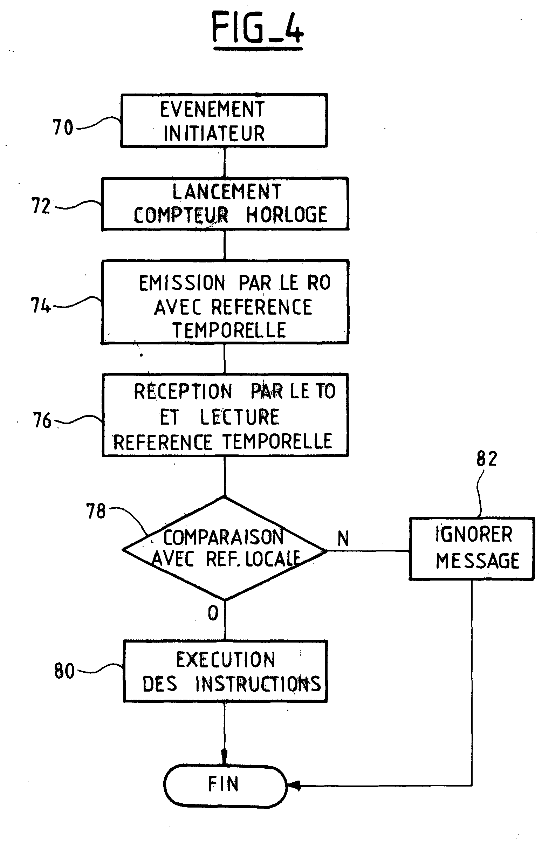

On peut utiliser le procédé décrit en référence à la figure 4 pour sécuriser encore davantage cette combinaison, et éviter, dans une installation complexe, ou voisine d'une installation complexe, tout chevauchement d'objets susceptibles d'être appariés bien que n'appartenant pas à un même ensemble. Ce procédé permet de définir avec une plus grande sûreté un événement initiateur, pour ainsi former un groupe parmi les objets bidirectionnels.

Le procédé repose sur le caractère synchrone de l'événement initiateur; il propose d'utiliser cet événement comme référence temporelle; cette référence permet à un récepteur d'ordres ayant reçu l'événement initiateur d'être identifié à l'aide de son temps local, mesuré par rapport à cette référence temporelle. Il suffit alors de prévoir qu'une commande ou une réponse émise par un récepteur d'ordres est accompagnée d'une indication du temps local, comme décrit maintenant.

L'étape 70 est celle à laquelle se produit l'événement initiateur synchrone; comme expliqué plus haut, il peut s'agir d'une commande extérieure - dans l'exemple une action particulière sur le secteur. Il peut aussi s'agir d'une combinaison d'une commande extérieure et d'une commande reçue depuis un transmetteur d'ordres, comme expliqué plus haut.

A l'étape 72, chaque récepteur d'ordres ayant perçu l'événement initiateur lance un compteur horloge.

A l'étape 74, un récepteur d'ordres émet un signal; il peut s'agir du signal de l'étape 44 de la figure 3, ou de tout autre signal émis ultérieurement par le récepteur d'ordres; ce signal comprend, outre l'identifiant du récepteur d'ordres ou des commandes, une indication du compteur horloge. De la sorte, le signal émis par le récepteur d'ordres est daté par rapport à la référence temporelle que constitue l'événement initiateur.

A l'étape 76, le signal émis à l'étape 74 est reçu par l'objet auquel il est destiné - par exemple le transmetteur d'ordres. Celui-ci dispose ainsi de l'indication du compteur horloge. A l'étape 78, cette indication est comparée à une indication calculée localement dans le transmetteur d'ordres; cette indication peut résulter d'une comparaison avec les indications temporelles reçues de la part des autres récepteurs d'ordres. Elle peut aussi résulter d'un compteur d'horloge du transmetteur d'ordres - notamment si celui-ci est à l'origine de l'événement initiateur.

Si l'indication temporelle du signal reçu est cohérente, on passe à l'étape 80, dans laquelle les instructions ou commandes émises par le récepteur d'ordres sont traitées; inversement, si l'indication temporelle n'est pas cohérente avec l'indication calculée localement, on passe à l'étape 82. A l'étape 82, on a déterminé que le signal émis à l'étape 76 n'est pas cohérente, et que le signal reçu à l'étape 76 ne provient pas d'un récepteur d'ordres ayant subi l'événement initiateur. On ignore le message ou les instructions reçues.

Le procédé de la figure 4 permet donc d'identifier avec une sûreté plus grande l'origine d'un message; il permet de sécuriser la constitution de groupes à l'aide d'un événement initiateur.

Des variantes au procédé décrit à la figure 4 sont possibles. Ainsi, si le transmetteur d'ordres n'est pas lui-même en mesure de percevoir l'événement initiateur - par exemple par ce que le transmetteur d'ordres est un objet nomade, non relié au secteur - il peut néanmoins enclencher son propre compteur de temps au moment de sa première activation. Les valeurs de compteurs relevés dans chaque trame sont alors diminuées de la valeur du compteur du transmetteur d'ordres avant d'être enregistrées avec tous les identifiants des récepteurs d'ordres lors de la capture. En fin de phase capture, ces valeurs sont toutes comparées, et celles s'écartant sensiblement de la valeur moyenne correspondent à des identifiants qui ne seront pas pris en compte.

On peut aussi changer la façon de coder la référence temporelle. Ainsi, si les différents objets sont munis d'une horloge interne - par exemple pour permettre une programmation horaire par l'utilisateur - ils peuvent non pas lancer un compteur, mais simplement noter la date et/ou l'heure de l'événement initiateur. Cette date et/ou cette heure peut ensuite être émise dans un message.

Le test de cohérence de l'étape 78 dépend de la précision souhaitée et de la dérive des compteurs. Pour des horloges telles que celles couramment utilisées dans les volets roulants, présentant une dérive de l'ordre de 300 ms/heure, on peut considérer que les objets ayant reçu un même événement initiateur doivent répondre avec une indication temporelle égale à 10 ms près, pour une durée d'étape 44 supposée limitée à deux minutes. Ceci permet de différencier des événements initiateurs séparés de moins de 100 ms, et rend extrêmement improbable en pratique toute confusion entre deux groupes d'objets.

Dans l'exemple de la figure 4, on a décrit l'insertion d'une indication temporelle dans les messages émis par les récepteurs d'ordres à l'attention d'un transmetteur d'ordres. Le procédé de la figure 4 est donc appliqué à l'exemple de la figure 3. On comprend toutefois que la définition d'un groupe parmi les récepteurs d'ordres, expliquée en référence à la figure 4, peut être mise en oeuvre à d'autres fins que l'appariement décrit en référence à la figure 3. Dans le cas des opérateurs domotiques, le procédé de la figure 4 peut être mise en œuvre pour la définition d'une commande générale, pour une programmation centralisée de tous les récepteurs ou d'une partie de ceux-ci. Plus généralement, le procédé de la figure 4 peut être utilisé pour toute démarche sur les objets d'un groupe - le groupe étant défini par l'événement initiateur.

Par rapport à la solution décrite à la figure 3, la solution de la figure 4 assure une meilleure sûreté, même si des démarches distinctes de programmation sont mises en œuvre sur des objets - ce qui peut notamment être le cas si des opérateurs sont simultanément programmés dans des appartements voisins.

Dans l'exemple de la figure 4, les différents objets émettent tous des messages : ceci est utile dans la mesure où les différents objets agissent comme récepteurs d'ordres, et transmettent pour l'appariement leur identifiant vers le transmetteur d'ordres; pour constituer un groupe, cette solution ne s'impose pas : il suffit qu'un seul objet fournisse aux autres une indication temporelle pour que les autres objets puissent déterminer s'ils appartiennent ou non au même groupe que celui qui a fourni l'indication. On pourrait ainsi susciter la génération de la liste des objets d'un groupe en envoyant à l'aide d'un objet une commande avec une indication temporelle; les autres objets ayant la même indication temporelle pourraient alors se déclarer. Cette solution limite les échanges dans la mesure où seuls les membres du groupe s'annoncent.

La solution de la figure 4 s'implémente en programmant simplement les récepteurs d'ordres pour émettre une référence temporelle, dans un ou dans tous les messages.

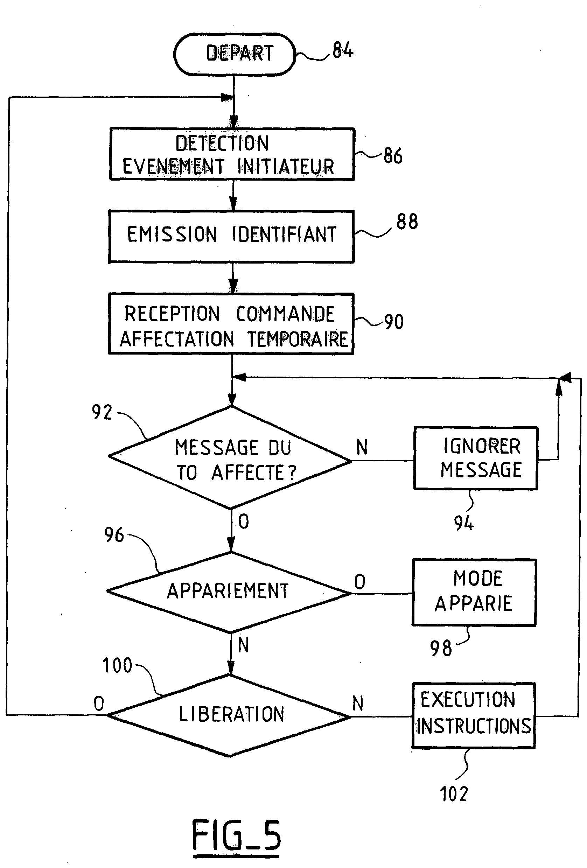

La figure 5 montre un ordinogramme du procédé mis en œuvre dans un objet bidirectionnel utilisé comme récepteur d'ordres. On suppose dans l'exemple de la figure un événement initiateur constitué d'une double coupure secteur, comme décrit à la figure 3, sans la vérification temporelle de la figure 4. Au départ (étape 84), le récepteur d'ordres attend un événement initiateur. A l'étape 86, le récepteur d'ordres détecte un événement initiateur; comme expliqué plus haut, il émet à l'étape 88 son identifiant et une indication qu'il est disponible pour appariement; on n'a pas représenté à l'étape 88 la répétition éventuelle de cette émission pour gérer les collisions. Le récepteur d'ordres attend ensuite une commande d'affectation temporaire. A l'étape 90, il reçoit une commande d'affectation temporaire et stocke l'identifiant du transmetteur d'ordres auquel il est temporairement affecté.

A l'étape 92, à réception d'un message, le récepteur d'ordres vérifie si le message provient du transmetteur d'ordres auquel il est affecté. Si ce n'est pas le cas, il passe à l'étape 94, où le message est ignoré et repasse en attente d'un nouveau message.

Si le message reçu provient du transmetteur d'ordres auquel le récepteur d'ordres est affecté, le récepteur d'ordres exécute les instructions contenues dans le message. Plus précisément, on teste en 96 si les instructions sont des instructions d'appariement. Si c'est le cas, le récepteur passe en 98, où il est apparié et fonctionne ensuite en mode apparié en ne répondant plus qu'au transmetteur auquel il est apparié. Si les instructions ne sont pas des instructions d'appariement, on teste en 100 s'il s'agit d'instructions de libération.

Si c'est le cas, le récepteur d'ordres est libéré sans avoir été apparié; le programme repasse à l'étape 86, dans l'attente d'un nouvel événement initiateur; sinon, le récepteur passe à l'étape 102, dans laquelle les instructions sont exécutées, puis repasse à l'étape 92, dans l'attente d'un nouveau message du transmetteur d'ordres auquel il est apparié. Les instructions exécutées à l'étape 102 peuvent par exemple être des instructions d'exécution d'un ordre de réaction, permettant l'identification visuelle du récepteur d'ordres par l'intermédiaire du produit qu'il commande.

L'ordinogramme de la figure 5 ne montre pas le cas d'une libération après une durée fixe, mentionnée comme solution alternative dans la description de la figure 3. On pourrait aussi alterner l'ordre des étapes 96, 98, 100 et 102, ou supprimer certaines de ces étapes en fonction des instructions envoyées au cours de l'appariement provisoire.

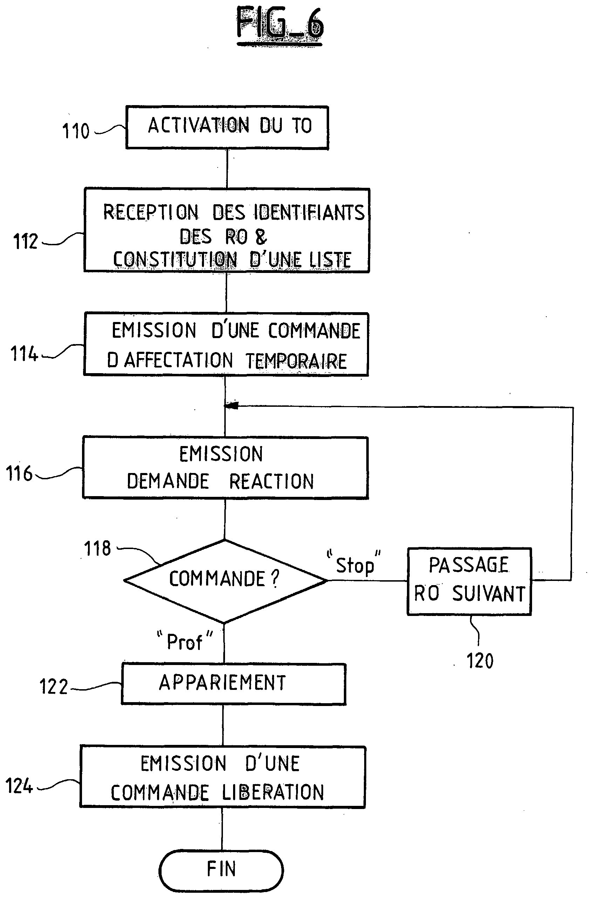

La figure 6 montre un ordinogramme du procédé mis en œuvre dans un objet bidirectionnel utilisé comme transmetteur d'ordres; on suppose, comme dans l'exemple de la figure 3, un transmetteur d'ordres utilisant un bouton *Stop* et un bouton *Prog* utilisés pour le procédé d'appariement. A l'étape 110, le transmetteur d'ordres est activé. Cette activation rend dans la suite le transmetteur d'ordres sensibles aux émissions par les récepteurs d'ordres de leur identifiant. Cette activation peut consister en une manipulation particulière sur le transmetteur d'ordres; il peut simplement s'agir d'une mise sous tension du transmetteur d'ordres, qui est suivi d'une activation automatique.

A l'étape 112, le transmetteur d'ordres reçoit les émissions provenant des récepteurs d'ordres et contenant les identifiants des récepteurs d'ordres, voir l'étape 44 de la figure 3. Le transmetteur d'ordres peut ainsi constituer une liste des récepteurs d'ordres disponibles pour une affectation temporaire.

Si les récepteurs d'ordres émettent une référence temporelle, comme expliqué à l'étape 74 de la figure 4, la constitution de la liste à l'étape 112 peut impliquer la comparaison des références temporelles, comme expliqué en référence à la figure 4. De ce point de vue, bien que la probabilité soit faible, il est possible dans un chantier d'installation couvrant par exemple plusieurs étages de bureaux ou d'appartements qu'il y ait chevauchement de deux événements initiateurs portant sur un nombre comparable d'objets. Dans ce cas, un test de cohérence des références temporelles émises par les récepteurs d'ordres ne saura dire quels sont les objets appartenant au bon groupe. Le test de cohérence peut être conçu de manière à rejeter l'ensemble des identifiants si tous ne sont pas dans une plage temporelle cohérente, ou encore à rejeter l'ensemble si la proportion d'identifiants non cohérents dépasse un seuil donné. Dans ce cas, il est simplement nécessaire de provoquer un nouvel événement initiateur pour constituer le groupe.

On pourrait aussi prévoir que les différents récepteurs d'ordres ne s'annoncent que sur réception d'un signal du transmetteur d'ordres, indiquant qu'il est prêt à recevoir leur annonce et leur identifiant. Ceci ajoute toutefois une étape et allonge la durée de comptage des horloges internes.

A l'étape 114, le transmetteur d'ordres émet une commande d'affectation temporaire. Cette commande peut être accompagnée d'une référence temporelle, si l'on utilise le principe proposé à la figure 4. Cette solution évite que l'on n'affecte temporairement des récepteurs d'ordres ne faisant pas partie du groupe envisagé. On peut aussi émettre une commande d'affectation temporaire à destination des récepteurs d'ordres de la liste; ceci est plus sûr, mais allonge les messages. Dans l'exemple de boutons considéré, on pourrait utiliser le bouton *Prog* pour déclencher cette étape.

A l'étape 116, l'utilisateur commence à parcourir la liste. On peut par exemple utiliser le bouton *Stop.* Un appui sur ce bouton provoque alors l'émission par le transmetteur d'ordres d'une demande de réaction.

A la suite de cette demande de réaction, on attend une nouvelle commande de l'utilisateur, étape 118. Si l'utilisateur appuie sur le bouton *Stop,* on passe au récepteur d'ordres suivant - étape 120 - et on repasse à l'étape 116. Comme expliqué plus haut, l'ordre de parcours de la liste est sans incidence.

Si à l'étape 118, l'utilisateur appuie sur la commande *Prog,* on passe à l'étape 122 qui est l'étape d'appariement. Cette étape peut simplement consister à envoyer une commande d'appariement au récepteur d'ordres auquel la demande de réaction vient d'être envoyée. On peut aussi prévoir des échanges plus complexes ou plus simples, comme mentionné plus haut.

Après cette étape, on émet une commande de libération, comme représenté à l'étape 124; on peut utiliser soit un deuxième appui sur la touche *Prog,* soit un nouvel appui sur la touche *Stop,* soit une combinaison quelconque de touches. Le programme est alors terminé et le transmetteur d'ordres peut être utilisé en mode normal pour la commande du récepteur d'ordres apparié. Comme expliqué plus haut, l'émission d'une commande de libération n'est pas indispensable. On pourrait ainsi prévoir une libération automatique après une durée prédéterminée. On pourrait encore à nouveau parcourir la liste pour apparier un autre récepteur d'ordre, comme expliqué plus haut; ceci évite de devoir à nouveau constituer une liste pour un nouvel appariement.

L'ordinogramme de la figure 6 est schématique et ne montre notamment pas systématiquement les étapes d'attente d'appui d'un bouton par l'utilisateur.

Bien entendu, l'invention n'est pas limitée aux modes de réalisation donnés plus haut. Ainsi, dans l'exemple de la figure 3, on pourrait aussi choisir directement le récepteur à apparier dans la liste, sans passer par les étapes 52, 54 et 58. Ceci pourrait être le cas par exemple s'il faut apparier un transmetteur d'ordres à chaque récepteur, dans un ordre indifférent. Ceci pourrait aussi être le cas si l'on utilise comme transmetteur d'ordres affecté temporairement une console de programmation montrant les identifiants des récepteurs.

La transmission radio utilisée entre un transmetteur et un récepteur n'est donnée qu'à titre d'exemple et peuvent être modifiée. L'invention s'applique notamment, que les transmetteurs et les récepteurs utilisent une fréquence unique ou émettent chacun sur une fréquence distincte, ou par sauts de fréquences, ou avec des modulations différentes. En fait, le procédé s'applique dès lors que les transmetteurs ou récepteurs d'ordres sont des "objets bidirectionnels" capables d'émettre et de recevoir.

On a utilisé les mots "récepteurs d'ordres" et "opérateurs", qui s'appliquent notamment à l'exemple des opérateurs de volets roulants. Le récepteur et l'opérateur peuvent être des éléments distincts, comme dans les exemples, ou alors former un ensemble unique - par exemple par intégration du récepteur d'ordres dans l'opérateur.

Dans les exemples, les transmetteurs envoient leur adresse vers le récepteur lors de l'émission d'une commande; on peut manifestement coder ou encrypter l'adresse correspondante, en utilisant les techniques connues de l'état de la technique.

## Revendications

1. Un procédé d'appariement d'un objet bidirectionnel (4, 10, 14) présentant des capacités d'émission et de réception et agissant comme récepteur d'ordres de système domotique, avec un objet bidirectionnel (16) présentant des capacités d'émission et de réception agissant comme transmetteur d'ordres de système domotique, le récepteur d'ordres présentant trois états distincts : un premier état dans lequel le récepteur d'ordres n'est pas apparié, un deuxième état dans lequel le récepteur d'ordres est affecté temporairement à un transmetteur d'ordres et un troisième état dans lequel le récepteur d'ordres est apparié, comprenant les étapes de :
a) affectation temporaire (48) d'au moins un objet bidirectionnel agissant comme récepteur d'ordres à un objet bidirectionnel agissant comme transmetteur d'ordres, de sorte que, pendant l'affectation temporaire, le récepteur ne répond pas ou plus aux commandes reçues depuis d'autres transmetteurs d'ordres que le transmetteur d'ordres auquel il est temporairement affecté ;
b) sélection (52, 54, 58) d'un objet bidirectionnel agissant comme récepteur d'ordres parmi lesdits objets affectés temporairement;
c) appariement (56) de l'objet sélectionné, le récepteur d'ordre passant du deuxième état au troisième état lorsqu'il reçoit une commande d'appariement ; et
d) libération (62) des objets affectés temporairement distincts de l'objet apparié ou des objets appariés.

2. Le procédé de la revendication 1, **caractérisé en ce qu'**il comprend une itération des étapes b) de sélection et c) d'appariement.

3. Le procédé de la revendication 1 ou 2, **caractérisé en ce que** l'étape d'affectation temporaire comprend :
a1) en réponse à un événement initiateur (42), l'envoi (44) de son identifiant par au moins un objet bidirectionnel agissant comme récepteur d'ordres;
a2) l'envoi (46) par un objet bidirectionnel agissant comme transmetteur d'ordres de son identifiant;
a3) le stockage par un objet bidirectionnel agissant comme récepteur d'ordres de l'identifiant de l'objet bidirectionnel agissant comme transmetteur d'ordres et
a4) le stockage par l'objet bidirectionnel agissant comme transmetteur d'ordres de l'identifiant de chaque objet bidirectionnel agissant comme récepteur d'ordres.

4. Le procédé de la revendication 3, **caractérisé en ce que** l'étape a1) comprend l'envoi avec l'identifiant d'une référence temporelle fonction de l'instant de l'événement initiateur.

5. Le procédé de la revendication 4, **caractérisé en ce que** l'étape a4) comprend le stockage des identifiants des objets bidirectionnels agissant comme récepteur d'ordres présentant des références temporelles identiques ou similaires.

6. Le procédé de l'une des revendications 1 à 5, **caractérisé en ce que** l'étape de sélection comprend
b1) l'envoi (50) d'une commande de demande de réaction depuis l'objet agissant comme transmetteur d'ordres vers un des objets affectés temporairement ;
b2) une réaction (52) de celui des objets affectés temporairement vers lequel la commande de demande de réaction est émise;
b3) si l'objet ayant réagi n'est pas l'objet souhaité, la répétition de l'étape d'envoi d'une demande de réaction, mais vers un autre (50) des objets affectés temporairement.

7. Le procédé de l'une des revendications 1 à 6, **caractérisé en ce que** l'étape de libération comprend la libération des objets affectés temporairement distincts de l'objet apparié en l'absence de réception de commande pendant une durée fixe.

8. Le procédé de l'une des revendications 1 à 6, **caractérisé en ce que** l'étape de libération comprend la libération d'un objet affecté temporairement à réception d'une commande d'appariement destinée à un autre objet affecté temporairement.

9. Le procédé de l'une des revendications 1 à 6, **caractérisé en ce que** l'étape de libération comprend l'émission par l'objet agissant comme transmetteur d'ordres d'un ordre de libération.

10. Le procédé de l'une des revendications 1 à 9, **caractérisé en ce que** l'étape d'appariement comprend l'appariement à l'objet sélectionné de l'objet bidirectionnel auquel l'objet sélectionné était affecté.

11. Le procédé de l'une des revendications 1 à 9, **caractérisé en ce que** l'étape d'appariement comprend l'appariement à l'objet sélectionné d'un objet bidirectionnel différent de l'objet bidirectionnel auquel l'objet sélectionné était affecté.

12. Un programme d'exploitation d'un objet bidirectionnel présentant des capacités d'émission et de réception et agissant comme récepteur d'ordres de système domotique, le récepteur d'ordres présentant trois états distincts vis-à-vis d'un autre objet bidirectionnel présentant des capacités d'émission et de réception agissant comme transmetteur d'ordres : un premier état dans lequel le récepteur d'ordres n'est pas apparié, un deuxième état dans lequel le récepteur d'ordres est affecté temporairement à un transmetteur d'ordres et un troisième état dans lequel le récepteur d'ordres est apparié, le programme comprenant:
a) des instructions qui, lorsqu'elles sont exécutées par une unité logique, mettent en œuvre une routine d'affectation temporaire (90) à un objet bidirectionnel agissant comme transmetteur d'ordres, de sorte que, pendant l'affectation temporaire, le récepteur ne répond pas ou plus aux commandes reçues depuis d'autres transmetteurs d'ordres que le transmetteur d'ordres auquel il est temporairement affecté ;
b) des instructions qui, lorsqu'elles sont exécutées par une unité logique, mettent en œuvre une routine d'appariement (98) à un objet bidirectionnel agissant comme transmetteur d'ordres, le récepteur d'ordre passant du deuxième état au troisième état lorsqu'il reçoit une commande d'appariement, et
c) des instructions qui, lorsqu'elles sont exécutées par une unité logique, mettent en œuvre une routine de libération (100) mettant fin à l'affectation temporaire.

13. Le programme de la revendication 12, **caractérisé en ce que** la routine d'affectation temporaire comprend :
a1) une routine en réponse à un événement initiateur (86), d'envoi (88) d'un identifiant;
a2) une routine de réception d'un identifiant;
a3) une routine de stockage de l'identifiant reçu.

14. Le programme de la revendication 12, **caractérisé en ce que** la routine d'envoi comprend une routine d'envoi avec l'identifiant d'une référence temporelle fonction de l'instant de l'événement initiateur.

15. Le programme de la revendication 12, 13 ou 14, **caractérisé en ce que** la routine de libération comprend une routine de libération à réception d'une commande d'appariement destinée à un autre objet.

16. Le programme de la revendication 12, 13 ou 14, **caractérisé en ce que** la routine de libération comprend une routine de libération à réception d'une commande de libération.

17. Le programme de l'une des revendications 12 à 16, **caractérisé en ce que** la routine d'appariement comprend une routine d'appariement audit objet bidirectionnel agissant comme transmetteur d'ordres.

18. Le programme de l'une des revendications 12 à 16, **caractérisé en ce que** la routine d'appariement comprend une routine d'appariement à un objet bidirectionnel autre que ledit objet bidirectionnel agissant comme transmetteur d'ordres.

19. Un programme d'exploitation d'un objet bidirectionnel présentant des capacités d'émission et de réception et agissant comme transmetteur d'ordres de système domotique, le programme comprenant des instructions qui, lorsqu'elles sont exécutées par une unité logique, mettent en œuvre des routines de :
a) réception et stockage (112) de l'identifiant d'au moins un objet bidirectionnel agissant comme récepteur d'ordres, le récepteur d'ordres présentant trois états distincts vis-à-vis d'un autre objet bidirectionnel présentant des capacités d'émission et de réception agissant comme transmetteur d'ordres : un premier état dans lequel le récepteur d'ordres n'est pas apparié, un deuxième état dans lequel le récepteur d'ordres est affecté temporairement à un transmetteur d'ordres et un troisième état dans lequel le récepteur d'ordres est apparié ;
b) envoi (114) d'une commande d'affectation temporaire, de sorte que, pendant l'affectation temporaire, le récepteur ne réponde pas ou plus aux commandes reçues depuis d'autres transmetteurs d'ordres que le transmetteur d'ordres auquel il est temporairement affecté ;
c) envoi (116) d'une commande de demande de réaction à un des objets dont l'identifiant a été stocké;
d) en fonction d'une instruction de l'utilisateur, envoi (116) d'une commande d'appariement au dit objet, de sorte que ledit objet passe du deuxième état au troisième état lorsqu'il reçoit ladite commande d'appariement ; et
e) envoi (124) d'une commande libération d'objets dont l'identifiant a été stocké et distincts d'un objet apparié auquel la commande de demande d'appariement a été envoyée.

20. Le programme de la revendication 19, **caractérisé en ce que** la routine de réception (112) comprend une routine de comparaison de références temporelles reçues avec les dits identifiants et de stockage des identifiants présentant des références temporelles identiques ou similaires.

21. Le programme de l'une des revendications 19 ou 20, **caractérisé en ce que** la routine c) comprend:
c1) une routine d'envoi d'une commande de demande de réaction vers un des objets dont l'identifiant a été stocké;
c2) une routine d'envoi d'une commande de demande de réaction vers un autre des objets dont l'identifiant a été stocké;
et **en ce que** la routine d) comprend une routine d'envoi d'une commande d'appariement de l'objet destinataire de la dernière commande de demande de réaction.

22. Le programme de l'une des revendications 19 à 21, **caractérisé en ce que** la routine e) comprend une routine d'envoi d'un ordre de libération.

23. Le programme de l'une des revendications 19 à 22, **caractérisé en ce que** la commande d'appariement de la routine d) comprend l'identifiant d'un autre objet.

24. Un objet bidirectionnel, présentant :
• un étage de réception (24);
• un étage d'émission (26);
• une mémoire (30) stockant le programme de l'une des revendications 12 à 18;
• une unité logique (28) pilotant l'étage de réception (24) et l'étage d'émission (26) et capable d'exécuter le programme stocké dans la mémoire (30).

25. Un objet bidirectionnel, présentant :
un étage de réception (24);
un étage d'émission (26);
une mémoire (30) stockant le programme de l'une des revendications 19 à 23;
une unité logique (28) pilotant l'étage de réception (24) et l'étage d'émission (26) et capable d'exécuter le programme stocké dans la mémoire (30).

## Patentansprüche

1. Verfahren zur Zuordnung eines bidirektionalen Gegenstands (4, 10, 14), aufweisend Sende- und Empfangsfähigkeiten und handelnd als Befehlsempfänger eines haustechnischen Systems, mit einem bidirektionalen Gegenstand (16), aufweisend Sende- und Empfangsfähigkeiten, der als Befehlsübermittler eines haustechnischen Systems handelt, wobei der Befehlsempfänger drei unterschiedliche Zustände aufweist: einen ersten Zustand, in dem der Befehlsempfänger nicht zugeordnet ist, einen zweiten Zustand, in dem der Befehlsempfänger temporär einem Befehlsübermittler zugewiesen ist und einen dritten Zustand, in dem der Befehlsempfänger zugeordnet ist, umfassend die Schritte:
a) temporäre Zuweisung (48) mindestens eines bidirektionalen Gegenstands, der als Befehlsempfänger handelt, zu einem bidirektionalen Gegenstand, der als Befehlsübermittler handelt, so dass, während der temporären Zuweisung, der Empfänger auf Kommandos, die er von anderen Befehlsübermittlern als dem Befehlsübermittler, dem er temporär zugewiesen ist, nicht oder nicht mehr antwortet;
b) Auswahl (52, 54, 58) eines bidirektionalen Gegenstands, der als Befehlsempfänger handelt, aus den temporär zugewiesenen Gegenständen;
c) Zuordnung (56) des ausgewählten Gegenstands, wobei der Befehlsempfänger aus dem zweiten Zustand in den dritten Zustand wechselt, wenn er ein Zuordnungskommando empfängt; und
d) Freigabe (62) der temporär zugewiesenen Gegenstände, die sich von dem zugeordneten Gegenstand oder den zugeordneten Gegenständen unterscheiden.

2. Verfahren nach Anspruch 1, **dadurch gekennzeichnet, dass** es eine Iteration der Schritte b) der Auswahl und c) der Zuordnung umfasst.

3. Verfahren nach Anspruch 1 oder 2, **dadurch gekennzeichnet, dass** der Schritt der temporären Zuweisung umfasst:
a1) als Antwort auf ein auslösendes Ereignis (42), den Versand (44) seines Kennworts durch mindestens einen bidirektionalen Gegenstand, der als Befehlsempfänger handelt;
a2) den Versand (46) durch einen bidirektionalen Gegenstand, der als Befehlsübermittler handelt, seines Kennworts;
a3) das Speichern, durch einen bidirektionalen Gegenstand, der als Befehlsempfänger handelt, des Kennworts des bidirektionalen Gegenstands, der als Befehlsübermittler handelt, und
a4) das Speichern, durch den bidirektionalen Gegenstand, der als Befehlsübermittler handelt, des Kennworts jedes bidirektionalen Gegenstands, der als Befehlsempfänger handelt.

4. Verfahren nach Anspruch 3, **dadurch gekennzeichnet, dass** der Schritt a1) den Versand mit dem Kennwort einer zeitlichen Referenz umfasst, die Funktion des Moments des auslösenden Ereignisses ist.

5. Verfahren nach Anspruch 4, **dadurch gekennzeichnet, dass** der Schritt a4) das Speichern der Kennwörter der bidirektionalen Gegenstände umfasst, die als Befehlsempfänger handeln, aufweisend identische oder ähnliche zeitliche Referenzen.

6. Verfahren nach einem der Ansprüche 1 bis 5, **dadurch gekennzeichnet, dass** der Schritt der Auswahl umfasst
b1) den Versand (50) eines Reaktionsanforderungskommandos von dem Gegenstand, der als Befehlsübermittler handelt, an einen der temporär zugewiesenen Gegenstände;
b2) eine Reaktion (52) desjenigen der temporär zugewiesenen Gegenstände, an die das Reaktionsanforderungskommando gesendet wurde;
b3) wenn der Gegenstand, der reagiert hat, nicht der gewünschte Gegenstand ist, die Wiederholung des Schritts des Versands einer Reaktionsanforderung, aber an einen andern (50) der temporär zugewiesenen Gegenstände.

7. Verfahren nach einem der Ansprüche 1 bis 6, **dadurch gekennzeichnet, dass** der Freigabeschritt die Freigabe der temporär zugewiesenen Gegenstände, die sich von dem zugeordneten Gegenstand unterscheiden, bei Abwesenheit des Kommandoempfangs während einer festen Dauer umfasst.

8. Verfahren nach einem der Ansprüche 1 bis 6, **dadurch gekennzeichnet, dass** der Freigabeschritt die Freigabe eines temporär zugewiesenen Gegenstands bei Empfang eines Zuordnungskommandos umfasst, das für einen anderen temporär zugewiesenen Gegenstand bestimmt ist.

9. Verfahren nach einem der Ansprüche 1 bis 6, **dadurch gekennzeichnet, dass** der Freigabeschritt das Senden, durch den Gegenstand, der als Befehlsübermittler handelt, eines Freigabebefehls umfasst.

10. Verfahren nach einem der Ansprüche 1 bis 9, **dadurch gekennzeichnet, dass** der Zuordnungsschritt die Zuordnung zu dem ausgewählten Gegenstand des bidirektionalen Gegenstands umfasst, dem der ausgewählte Gegenstand zugewiesen war.

11. Verfahren nach einem der Ansprüche 1 bis 9, **dadurch gekennzeichnet, dass** der Zuordnungsschritt die Zuordnung zu dem ausgewählten Gegenstand eines bidirektionalen Gegenstands umfasst, der sich von dem bidirektionalen Gegenstand unterscheidet, dem der ausgewählte Gegenstand zugewiesen war.

12. Programm zum Betrieb eines bidirektionalen Gegenstands, aufweisend Sende- und Empfangsfähigkeiten und handelnd als Befehlsempfänger eines haustechnischen Systems, wobei der Befehlsempfänger drei unterschiedliche Zustände gegenüber einem anderen bidirektionalen Gegenstand aufweist, der Sende- und Empfangsfähigkeiten aufweiset, handelnd als Befehlsübermittler: einen ersten Zustand, in dem der Befehlsempfänger nicht zugeordnet ist, einen zweiten Zustand, in dem der Befehlsempfänger temporär einem Befehlsübermittler zugewiesen ist und einen dritten Zustand, in dem der Befehlsempfänger zugeordnet ist,
wobei das Programm umfasst:
a) Instruktionen, die, wenn sie von einer logischen Einheit ausgeführt werden, eine temporäre Zuweisungsroutine (90) an einen bidirektionalen Gegenstand umsetzen, der als Befehlsübermittler handelt, so dass, während der temporären Zuweisung, der Empfänger auf Kommandos, die er von anderen Befehlsübermittlern als dem Befehlsübermittler, dem er temporär zugewiesen ist, nicht oder nicht mehr antwortet;
b) Instruktionen, die, wenn sie von einer logischen Einheit ausgeführt werden, eine Zuordnungsroutine (98) an einen bidirektionalen Gegenstand umsetzen, der als Befehlsübermittler handelt, wobei der Befehlsempfänger aus dem zweiten Zustand in den dritten Zustand wechselt, wenn er ein Zuordnungskommando erhält, und
c) Instruktionen, die, wenn sie von einer logischen Einheit ausgeführt werden, eine Freigaberoutine (100) umsetzen, welche die temporäre Zuweisung beendet.

13. Programm nach Anspruch 12, **dadurch gekennzeichnet, dass** die temporäre Zuweisungsroutine umfasst:
a1) eine Routine als Antwort auf ein auslösendes Ereignis (86) des Versands (88) eines Kennworts;
a2) eine Empfangsroutine eines Kennworts;
a3) eine Speicherroutine des empfangenen Kennworts.

14. Programm nach Anspruch 12, **dadurch gekennzeichnet, dass** die Versandroutine eine Versandroutine mit dem Kennwort einer zeitlichen Referenz als Funktion des Moments des auslösenden Ereignisses umfasst.

15. Programm nach Anspruch 12, 13 oder 14, **dadurch gekennzeichnet, dass** die Freigaberoutine eine Freigaberoutine bei Empfang eines Zuordnungskommandos umfasst, das für einen anderen Gegenstand bestimmt ist.

16. Programm nach Anspruch 12, 13 oder 14, **dadurch gekennzeichnet, dass** die Freigaberoutine eine Freigaberoutine bei Empfang eines Freigabekommandos umfasst.

17. Programm nach einem der Ansprüche 12 bis 16, **dadurch gekennzeichnet, dass** die Zuordnungsroutine eine Zuordnungsroutine zu dem bidirektionalen Gegenstand umfasst, der als Befehlsübermittler handelt.

18. Programm nach einem der Ansprüche 12 bis 16, **dadurch gekennzeichnet, dass** die Zuordnungsroutine eine Zuordnungsroutine zu einem bidirektionalen Gegenstand umfasst, der ein anderer ist als der bidirektionale Gegenstand, der als Befehlsübermittler handelt.

19. Programm zum Betrieb eines bidirektionalen Gegenstands, der Sende- und Empfangsfähigkeiten aufweist und als Befehlsübermittler eines haustechnischen Systems handelt, wobei das Programm Instruktionen umfasst, die, wenn sie von einer logischen Einheit ausgeführt werden, folgende Routinen umsetzen:
a) Empfang und Speichern (112) des Kennworts mindestens eines bidirektionalen Gegenstands, der als Befehlsempfänger handelt, wobei der Befehlsempfänger drei unterschiedliche Zustände gegenüber einem anderen bidirektionalen Gegenstand aufweist, der Sende- und Empfangsfähigkeiten aufweist, handelnd als Befehlsübermittler: einen ersten Zustand, in dem der Befehlsempfänger nicht zugeordnet ist, einen zweiten Zustand, in dem der Befehlsempfänger temporär einem Befehlsübermittler zugewiesen ist und einen dritten Zustand, in dem der Befehlsempfänger zugeordnet ist;
b) Versand (114) eines temporären Zuweisungskommandos, so dass, während der temporären Zuweisung, der Empfänger auf Kommandos, die er von anderen Befehlsübermittlern als dem Befehlsübermittler, dem er temporär zugewiesen ist, nicht oder nicht mehr antwortet;
c) Versand (116) eines Reaktionsanforderungskommandos an einen der Gegenstände, dessen Kennwort gespeichert wurde;
d) in Abhängigkeit von einer Instruktion des Benutzers, Versand (116) eines Zuordnungskommandos an den Gegenstand, so dass der Gegenstand aus dem zweiten Zustand in den dritten Zustand wechselt, wenn er das Zuordnungskommando empfängt; und
e) Versand (124) eines Freigabekommandos von Gegenständen, deren Kennwort gespeichert wurde und sich von einem zugeordneten Gegenstand unterscheiden, an den das Zuordnungsanforderungskommando geschickt wurde.

20. Programm nach Anspruch 19, **dadurch gekennzeichnet, dass** die Empfangsroutine (112) eine Vergleichsroutine von zeitlichen Referenzen umfasst, die mit den Kennwörtern empfangen wurden, und eine Speicherroutine der Kennwörter, die identische oder ähnliche zeitliche Referenzen aufweisen.

21. Programm nach einem der Ansprüche 19 oder 20, **dadurch gekennzeichnet, dass** die Routine c) umfasst:
c1) eine Versandroutine eines Reaktionsanforderungskommandos an einen der Gegenstände, deren Kennwort gespeichert wurde;
c2) eine Versandroutine eines Reaktionsanforderungskommandos an einen anderen der Gegenstände, deren Kennwort gespeichert wurde;
und dass die Routine d) eine Versandroutine eines Zuordnungskommandos des Gegenstands umfasst, der Empfänger des letzten Reaktionsanforderungskommandos ist.

22. Programm nach einem der Ansprüche 19 bis 21, **dadurch gekennzeichnet, dass** die Routine e) eine Versandroutine eines Freigabebefehls umfasst.

23. Programm nach einem der Ansprüche 19 bis 22, **dadurch gekennzeichnet, dass** das Zuordnungskommando der Routine d) das Kennwort eines anderen Gegenstands umfasst.

24. Bidirektionaler Gegenstand, aufweisend:
- eine Empfangsstufe (24);
- eine Sendestufe (26);
- einen Speicher (30), der das Programm nach einem der Ansprüche 12 bis 18 speichert;
- eine logische Einheit (28), welche die Empfangsstufe (24) und die Sendestufe (26) steuert und imstande ist, das in dem Speicher (30) gespeicherte Programm auszuführen.

25. Bidirektionaler Gegenstand, aufweisend:
eine Empfangsstufe (24);
eine Sendestufe (26);
einen Speicher (30), der das Programm nach einem der Ansprüche 19 bis 23 speichert;
eine logische Einheit (28), welche die Empfangsstufe (24) und die Sendestufe (26) steuert und imstande ist, das in dem Speicher (30) gespeicherte Programm auszuführen.

## Claims

1. A method for pairing a bidirectional object (4,10,14) having emission and reception capabilities and acting as a home automation system orders receiver, with a bidirectional object (16) having emission and reception capabilities acting as a home automation system orders transmitter, the orders receiver having three distinct states: a first state in which the orders receiver is not paired, a second state in which the orders receiver is temporarily assigned to an orders transmitter and a third state in which the orders receiver is paired, comprising the steps of:
a) temporary assignment (48) of at least one bidirectional object acting as an orders receiver to a bidirectional object acting as an orders transmitter, so that, during the temporary assignment, the receiver does not or no longer respond to commands received from orders transmitters other than the orders transmitter to which it is temporarily assigned;
b) selection (52, 54, 58) of a bidirectional object acting as an orders receiver amongst said temporarily assigned objects;
c) pairing (56) of the selected object, the order receiver switching from the second state to the third state when it receives a pairing command; and
d) clearance (62) of the temporarily assigned objects that are distinct from the paired object or paired objects.

2. The pairing method of claim 1, **characterized in that** it comprises an iteration of the selection b) and pairing c) steps.

3. The pairing method of claim 1 or 2, **characterized in that** the temporary assignment step comprises:
a1) in response to an initiator event (42), sending (44) of its identifier by at least one bidirectional object acting as an orders receiver;
a2) sending (46) by a bidirectional object acting as an orders transmitter of its identifier;
a3) storage by a bidirectional object acting as an orders receiver of the identifier of the bidirectional object acting as an orders transmitter and
a4) storage by the bidirectional object acting as an orders transmitter of the identifier of each bidirectional object acting as an orders receiver.

4. The pairing method of claim 3, **characterized in that** step a1) comprises the sending, together with the identifier, of a time reference as a function of the moment of the initiator event.

5. The pairing method of claim 4, **characterized in that** step a4) comprises the storage of the identifiers of the bidirectional objects acting as orders receiver having identical or similar time references.

6. The pairing method of any of claims 1 to 5, **characterized in that** the selection step comprises
b1) sending (50) of a reaction request command from the object acting as an orders transmitter to one of the temporarily assigned objects;
b2) a reaction (52) of that amongst the temporarily assigned objects to which the reaction request command is emitted;
b3) if the object having reacted is not the desired object, the repetition of the step of sending a reaction request, but to another one (50) amongst the temporarily assigned objects.

7. The pairing method of any of claims 1 to 6, **characterized in that** the clearance step comprises the clearance of the temporarily assigned objects distinct from the paired object in the absence of command reception for a fixed time period.

8. The pairing method of any of claims 1 to 6, **characterized in that** the clearance step comprises the clearance of a temporarily assigned object on reception of a pairing command intended to another temporarily assigned object.

9. The pairing method of any of claims 1 to 6, **characterized in that** the clearance step comprises the emission by the object acting as an orders transmitter of a clearance order.

10. The pairing method of any of claims 1 to 9, **characterized in that** the pairing step comprises the pairing to the selected object of the bidirectional object to which the selected object has been assigned.

11. The pairing method of any of claims 1 to 9, **characterized in that** the pairing step comprises the pairing to the selected object of a bidirectional object different from the bidirectional object to which the selected object has been assigned.

12. A program for operating a bidirectional object having emission and reception capabilities and acting as a home automation system orders receiver, the orders receiver having three distinct states with regards to another bidirectional object having emission and reception capabilities acting as an orders transmitter: a first state in which the orders receiver is not paired, a second state in which the orders receiver is temporarily assigned to an orders transmitter; and a third state in which the orders receiver is paired,
the program comprising:
a) instructions which, when executed by a logical unit, implement a temporary assignment routine (90) to a bidirectional object acting as an orders transmitter, so that, during the temporary assignment, the receiver does not or no longer respond to commands received from orders transmitters other than the orders transmitter to which it is temporarily assigned;
b) instructions which, when executed by a logical unit, implement a pairing routine (98) to a bidirectional object acting as an orders transmitter, the order receiver switching from the second state to the third state when it receives a pairing command, and
c) instructions which, when executed by a logical unit, implement a clearance routine (100) ending the temporary assignment.

13. The program of claim 12, **characterized in that** the temporary assignment routine comprises:
a1) a routine in response to an initiator event (86), of sending (88) an identifier;
a2) a routine of receiving an identifier;
a3) a routine of storing the received identifier.

14. The program of claim 12, **characterized in that** the sending routine comprises a routine of sending, together with the identifier, a time reference as a function of the moment of the initiator event.

15. The program of claim 12, 13 or 14, **characterized in that** the clearance routine comprises a routine of clearing, on reception of a pairing command intended to another object.

16. The program of claim 12, 13 or 14, **characterized in that** the clearance routine comprises a routine of clearing on reception of a clearance command.

17. The program of any of claims 12 to 16, **characterized in that** the pairing routine comprises a routine of pairing to said bidirectional object acting as an orders transmitter.

18. The program of any of claims 12 to 16, **characterized in that** the pairing routine comprises a routine of pairing to a bidirectional object other than said bidirectional object acting as an orders transmitter.

19. A program for operating a bidirectional object having emission and reception capabilities and acting as a home automation system orders transmitter, the program comprising instructions which, when executed by a logical unit, implement routines of:
a) reception and storage (112) of the identifier of at least one bidirectional object acting as an orders receiver, the orders receiver having three distinct states with regards to another bidirectional object having emission and reception capabilities acting as an orders transmitter: a first state in which the orders receiver is not paired, a second state in which the orders receiver is temporarily assigned to an orders transmitter and a third state in which the orders receiver is paired;
b) sending (114) of a temporary assignment command, so that, during the temporary assignment, the receiver does not or no longer respond to commands received from orders transmitters other than the orders transmitter to which it is temporarily assigned;
c) sending (116) of a reaction request command to one amongst the objects whose identifier has been stored;
d) depending on a user instruction, sending (116) of a pairing command to said object, so that said object switches from the second state to the third state when it receives said pairing command; and
e) sending (124) of a command for clearing objects whose identifier has been stored and distinct from a paired object to which the pairing request command has been sent.

20. The program of claim 19, **characterized in that** the receiving routine (112) comprises a routine of comparing received time references with said identifiers and storing the identifiers with identical or similar time references.

21. The program of any of claims 19 or 20, **characterized in that** the routine c) comprises:
c1) a routine of sending a reaction request order to one amongst the objects whose identifier has been stored;
c2) a routine of sending a reaction request command to another one amongst the objects whose identifier has been stored;
and **in that** the routine d) comprises a routine of sending a pairing command of the recipient object of the last reaction request command.

22. The program of any of claims 19 to 21, **characterized in that** the routine e) comprises a routine of sending a clearance order.

23. The program of any of claims 19 to 22, **characterized in that** the pairing command of routine d) comprises the identifier of another object.

24. A bidirectional object, having:
• a receiving stage (24);
• an emitting stage (26);
• a memory (30) storing the program of any of claims 12 to 18;
• a logical unit (28) piloting the receiving stage (24) and the emitting stage (26) and capable of executing the program stored in the memory (30).

25. A bidirectional object, having:
• a receiving stage (24);
• an emitting stage (26);
• a memory (30) storing the program of any of claims 19 to 23;
• a logical unit (28) piloting the receiving stage (24) and the emitting stage (26) and capable of executing the program stored in the memory (30).
